Europäisches Patentamt

European Patent Office

Office européen des brevets

(11) Veröffentlichungsnummer: **0 262 625 B1**

# EUROPÄISCHE PATENTSCHRIFT

(45) Veröffentlichungstag der Patentschrift: 25.09.91

(21) Anmeldenummer: 87114082.8

(22) Anmeldetag: 26.09.87

(51) Int. Cl.⁵: **F16H 3/08**, F16H 63/44, B60K 17/08

(54) Verfahren zum Schalten eines aus mehreren Getriebeeinheiten bestehenden Getriebes.

(30) Priorität: 01.10.86 DE 3633372

(43) Veröffentlichungstag der Anmeldung:
06.04.88 Patentblatt 88/14

(45) Bekanntmachung des Hinweises auf die
Patenterteilung:
25.09.91 Patentblatt 91/39

(84) Benannte Vertragsstaaten:
AT BE CH DE ES FR GB IT LI

(56) Entgegenhaltungen:
EP-A- 0 052 814       WO-A-85/01335
DE-A- 3 012 661       DE-B- 2 633 730
DE-C- 1 188 449       GB-A- 1 596 830

(73) Patentinhaber: DEERE & COMPANY
1 John Deere Road
Moline, Illinois 61265(US)

(72) Erfinder: Schwarz, Reinhard
Jahnstrasse 7
W-7519 Gondelsheim(DE)
Erfinder: Nobis, Dieter
Reutestrasse 23
W-7901 Lonsee-Halzhausen(DE)
Erfinder: Stuhrmann, Heinz, Dr.
Otto-Beck-Strasse 26
W-6800 Mannheim(DE)

(74) Vertreter: Feldmann, Bernhard
DEERE & COMPANY European Office, Patent
Department Steubenstrasse 36-42 Postfach
503
W-6800 Mannheim 1(DE)

**Beschreibung**

Die Erfindung betrifft ein Verfahren zum Schalten eines Getriebes, das aus mehr als zwei hintereinander geschalteten Getriebeeinheiten besteht.

Aus der DE-A-3 012 661 geht eine aus mehreren Getriebeeinheiten bestehende Getriebeeinheit hervor, wobei eine erste Getriebeeinheit einen Durchtrieb oder eine Untersetzung bewirkt und hydraulisch schaltbar ist. Eine zweite Getriebeeinheit betrifft eine Schaltgetriebeeinheit, die mechanisch und synchronisiert schaltbar ist, und eine letzte Getriebeeinheit, die auf einer Abtriebswelle angeordnet ist und eine Gruppengetriebeeinheit bildet, ist mittels unsynchronisierter Schaltmuffen mechanisch schaltbar. Alle Getriebeeinheiten können unabhängig voneinander geschaltet werden, so daß eine Vielzahl von Schaltverbindungen erzielt werden kann.

Dieses Getriebe ist insoweit verbesserungsfähig, als es eine einfache Schaltbarkeit des Gruppengetriebes, also der letzten Getriebeeinheit, nicht zuläßt.

Die der Erfindung zugrunde liegende Aufgabe wird darin gesehen, eine Möglichkeit zu finden, die es ermöglicht, auch die Gruppengetriebeeinheit leicht und schnell zu schalten.

Diese Aufgabe ist durch das erfindungsgemäße Verfahren gelöst worden, das vorsieht, daß bei einem Schaltwechsel in der letzten Getriebeeinheit die beteiligten formschlüssigen Schaltverbindungen in der Schaltgetriebeeinheit gelöst werden und der Aufbau von Schaltverbindungen von der letzten Getriebeeinheit her durchgeführt wird.

Auf diese Weise werden die der letzten Getriebeeinheit vorangehenden Getriebeeinheiten nacheinander auf die Drehzahl der letzten Getriebeeinheit gebracht, die nicht veränderbar ist. Somit wird vermieden, daß eine der Getriebeeinheiten eine zu hohe Drehzahlangleichung zwischen zwei Getriebeeinheiten durchführen muß. Insbesondere bei einem Wechsel von Vorwärts- auf Rückwärtsfahrt, bei dem das gesamte Getriebe zum Stillstand gebracht werden muß, wird somit eine optimale Drehzahlangleichung ermöglicht. Gegebenenfalls kann als letzte Getriebeeinheit, auf deren Drehzahl die anderen Getriebeeinheiten gebracht werden müssen, auch eine vorletzte oder mittlere Getriebeeinheit angesehen werden, wenn diese diejenige ist, von der die unveränderliche Drehzahl, auf die synchronisiert werden muß, ausgeht. Eine Verringerung der zum Übersetzungswechsel erforderlichen Zeit wird erreicht, wenn nicht nur einige der Schaltverbindungen, sondern alle Schaltverbindungen synchronisiert sind. Wenn in dem Getriebe nicht formschlüssige Schaltverbindungen vorhanden sind, ist es vorteilhaft, auch diese zu öffnen, um so viele Schwungmassen wie möglich, die den Übersetzungswechsel beeinflussen, abzukoppeln. Eine Optimierung des Schaltverlaufes wird dann erreicht, wenn der Übersetzungswechsel automatisch und gegebenenfalls mit der Unterstützung von Pneumatik-, Elektro- oder Hydrauliksystemen durchgeführt wird.

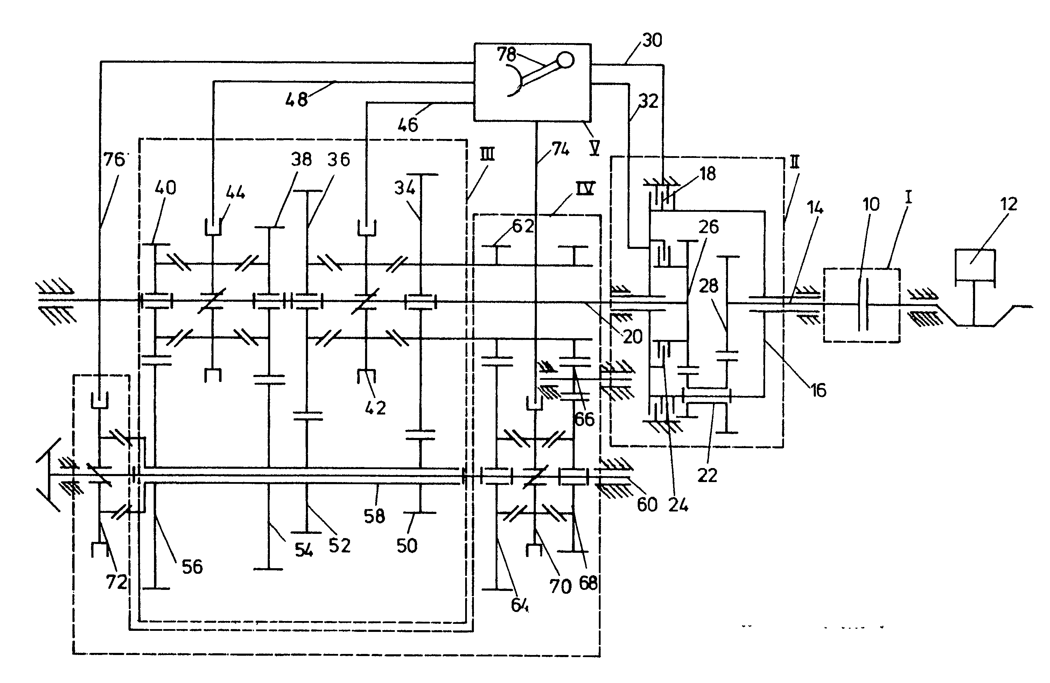

In der Zeichnung ist ein Getriebe in schematischer Darstellung mit einer Schalteinrichtung gezeigt, mittels welcher das erfindungsgemäße und nachstehend näher beschriebene Verfahren durchführbar ist. Das in der Zeichnung Dargestellte ist in fünf Gruppen I bis V unterteilt, wobei I eine Kupplung, II eine lastschaltbare Reduktionsgetriebeeinheit, III eine Schaltgetriebeein heit für vier Gänge, IV eine Gruppenschaltgetriebeeinheit und V eine Schalteinrichtung bezeichnen.

Die Kupplung I enthält zwei Kupplungshälften 10, von denen eine mit einem Motor 12 und eine mit einer Eingangswelle 14 für die Reduktionsgetriebeeinheit II verbunden ist. Die Kupplung I kann sowohl als herkömmliche mechanisch aus- und einrückbare Reibungskupplung wie auch als hydraulisch betätigbare Lamellenkupplung ausgebildet sein. Sie wird jeweils dann betätigt, wenn in der Schalt-oder der Gruppengetriebeeinheit III oder IV ein Übersetzungswechsel vollzogen wird.

Die Reduktionsgetriebeeinheit II weist ein Gehäuse 16, das über eine Lamellenbremse 18 an einem Rahmen oder dergleichen festlegbar, ansonsten aber frei drehbar ist, eine Ausgangswelle 20, ein Doppelzahnrad 22, das in dem Gehäuse 16 drehbar gelagert ist, und eine Lamellenkupplung 24 auf. Auf der Ausgangswelle 20 ist drehfest ein Ausgangszahnrad 26 befestigt, das mit dem Doppelzahnrad 22 einenends in Eingriff steht und das die Ausgangswelle 20 über die Lamellenkupplung 24 mit dem Gehäuse 16 bei entsprechender Steuerung drehfest verbindet. Anderenends kämmt das Doppelzahnrad 22 mit einem auf der Eingangswelle 14 drehfest angeordneten Eingangszahnrad 28, das einen kleineren Durchmesser als das Ausgangszahnrad 26 aufweist. Die Lamellenbremse 18 ist über eine Steuerleitung 30 und die Lamellenkupplung 24 über eine Steuerleitung 32 mit der Schalteinrichtung V verbunden, so daß die Reduktionsgetriebeeinheit II in einen direkten Durchtrieb und in einen untersetzenden Durchtrieb geschaltet werden kann.

In dem direkten Durchtrieb sind die Ausgangswelle 20 und das Ausgangszahnrad 26 über die Lamellenkupplung 24 starr mit dem Gehäuse 16 verbunden, so daß das Doppelzahnrad 22 ebenfalls festgehalten wird und lediglich als starre Verbindung zwischen dem Eingangszahnrad 28 und dem Ausgangs zahnrad 26 wirkt und somit keine Reduktion der Drehzahl der Eingangswelle 14 vornimmt. Die Lamellenbremse 18 ist dabei geöffnet.

In dem untersetzenden Durchtrieb ist die Lamellenbremse 18 geschlossen, so daß das Gehäuse 16 drehfest gehalten wird, während die Lamellenkupplung 24 geöffnet ist und eine Relativbewegung zwischen dem Ausgangszahnrad 26 und dem Gehäuse 16 zuläßt. In diesem Falle wird die Drehzahl der Eingangswelle 14 auf dem Weg über das Doppelzahnrad 22 reduziert. Die Beaufschlagung der Lamellenkupplung 24 und der Lamellenbremse 18 mit Druckmittel erfolgt von der Schalteinrichtung V aus über die Steuerleitungen 30 und 32.

Die Schaltgetriebeeinheit III enthält bei diesem Ausführungsbeispiel vier Zahnräder 34, 36, 38 und 40 mit jeweils unterschiedlichem Durchmesser, die drehbar auf der Ausgangswelle 20 der Reduktionsgetriebeeinheit II gelagert sind und über eine Synchronisiervorrichtung 42 für die Zahnräder 34 und 36 und eine Synchronisiervorrichtung 44 für die Zahnräder 38 und 40 mit dieser drehfest verbunden werden können. Die Synchronisiervorrichtungen 42 und 44 werden jeweils über Steuerverbindungen 46 und 48 von der Schalteinrichtung V aus bedient. Mit diesen vier Zahnrädern 34 bis 40 kämmen vier Zahnräder 50, 52, 54 und 56, die alle drehfest miteinander über einen Hohlkörper 58 verbunden und als Gesamtheit auf einer Abtriebswelle 60 für den Antrieb von nicht gezeigten Rädern eines Kraftfahrzeuges drehbar gelagert sind. Je nachdem, welches der Zahnräder 34 bis 40 über die Synchronisiervorrichtung 42 oder 44 mit der Ausgangswelle 20 verbunden wird, findet eine große oder eine geringere Untersetzung der Drehzahl der Ausgangswelle 60 statt.

Die Gruppengetriebeeinheit IV enthält ebenfalls ein Doppelzahnrad 62, das drehfest mit dem Zahnrad 34 auf der Ausgangswelle 20 der Reduktionsgetriebeeinheit II verbunden ist und stets mit einem Langsamgangrad 64 und mit einem Umkehrrad 66 kämmt. Das Umkehrrad 66 dient lediglich der Drehrichtungsumkehr und steht ständig mit einem Rückwärtszahnrad 68 in Eingriff. Das Langsamgangrad 64 und das Rückwärtsrad 68 sind drehbar auf der Abtriebswelle 60 gelagert und können über eine Synchronisiervorrichtung 70 mit der Abtriebswelle 60 drehfest verbunden werden. Außerdem kann der Hohlkörper 58 über eine Synchronisiervorrichtung 7 2 mit der Abtriebswelle 60 drehfest verbunden werden. Die Synchronisiervorrichtung 70 wird über eine Steuerverbindung 74 und die Synchronisiervorrichtung 72 wird über eine Steuerverbindung 76 von der Schalteinrichtung V aus betätigt.

Die Schalteinrichtung V kann beliebig ausgeführt sein, wobei es jedoch zweckmäßig wäre, einen Schalthebel 78 vorzusehen, der über einen nicht gezeigten in die Schalteinrichtung V integrierten elektrischen Schaltkreis die im folgenden beschriebene Vorgehensweise beim Wechsel von Übersetzungen in der Schalt- oder der Gruppengetriebeeinheit III oder IV einleitet.

Die Funktion der Reduktions-, der Schalt- und der Gruppengetriebeeinheit II, III und IV und deren detaillierter Aufbau können der DE-OS 3 012 661 entnommen werden, auf die hiermit ausdrücklich Bezug genommen wird.

Im wesentlichen ist deren Funktion aber folgende. Die Reduktionsgetriebeeinheit II nimmt wahlweise eine Drehzahländerung der Eingangswelle 14 um ca. 20 % vor, die bis zu der Abtriebswelle 60 erhalten bleibt. In der Gruppengetriebeeinheit IV findet eine Umkehr oder eine Erniedrigung aller von der Schaltgetriebeeinheit III erstellten Übersetzungen statt, und in der Schaltgetriebeeinheit III werden innerhalb des mit der Gruppengetriebeeinheit IV festgelegten Übersetzungsbereiches nochmals Zwischenübersetzungen geschaffen. Die Übersetzungswechsel in der Schaltgetriebeeinheit III und in der Reduktionsgetriebeeinheit II finden wie in der DE-OS 3 012 661 beschrieben statt und werden daher an dieser Stelle nicht erneut beschrieben.

Die Schalteinrichtung V ist derart aufgebaut, daß bei einem Übersetzungswechsel in der Gruppengetriebeeinheit IV zunächst alle Synchronisiervorrichtungen 42, 44 in der Schaltgetriebeeinheit III und, falls möglich, auch die in der Gruppengetriebeeinheit IV außer Eingriff mit den ihnen zugeordneten Zahnrädern 34 bis 40 bzw. mit dem Hohlkörper 58, dem Langsamgangrad 64 und dem Rückwärtsrad 68 gebracht werden. Gegebenenfalls können auch die Lamellenbremse 18 und die Lamellenkupplung 24 geöffnet werden, so daß kein Durchtrieb durch die Reduktionsgetriebeeinheit II möglich ist. Anschließend wird entweder der Hohlkörper 58, das Langsamgangrad 64 oder das Rückwärtsrad 68 über die zugehörige Synchronisiervorrichtung 70 oder 72 mit der Abtriebswelle 60 verbunden. Sobald diese Verbindung hergestellt ist, wird in der Schaltgetriebeeinheit III ein Übersetzungsverhältnis durch das Einrücken einer der Synchronisiervorrichtungen 42, 44 hergestellt. Daraufhin wird entweder die Lamellenbremse 18 oder die Lamellenkupplung 24 der Reduktionsgetriebeeinheit II eingerückt, sofern beide vorher geöffnet waren. Schließlich wird durch das Wiedereinrücken der Kupplung I der Kraftfluß zwischen dem Motor 12 und den nicht gezeigten Rädern geschlossen.

Ein Beispiel eines derartigen Übersetzungswechsels in der Gruppengetriebeeinheit IV geht davon aus, daß die Reduktionsgetriebeeinheit II einen direkten Durchtrieb liefert, daß die Schaltgetriebeeinheit III die geringste Übersetzung erbringt und daß die Gruppengetriebeeinheit IV sich in der Langsamganggruppe, also in der langsamsten Gruppe, befindet. Diese bedeutet, daß die Lamellenkupplung 24 eingerückt ist, daß das Zahnrad 40 über die Synchronisiervorrichtung 44 mit der Ausgangswelle 20 und über das Zahnrad 56 mit dem Hohlkörper 58 verbunden ist und daß der Hohlkörper 58 über das Zahnrad 50, das Zahnrad 34, das Doppelzahnrad 62, das Langsamgangrad 64 und die Synchronisiervorrichtung 70 mit der Abtriebswelle 60 verbunden ist. Dieser Zustand entspricht einem ersten direkten Langsamgang.

Es soll nun ein erster direkter Rückwärtsgang eingelegt werden.

Hierzu wird zunächst die Kupplung I geöffnet. Anschließend wird der Schalthebel 78 in eine Stellung gebracht, die dem ersten direkten Rückwärtsgang entspricht, so daß die Schalteinrichtung V den erforderlichen Schaltablauf vollziehen kann. Über diese werden dann zunächst die Synchronisiervorrichtungen 44 und 70 außer Eingriff mit dem Zahnrad 40 und dem Langsamgangrad 64 gebracht. Falls gewünscht, kann auch die Lamellenkupplung 24 in der Reduktionsgetriebeeinheit II geöffnet werden. Nachdem all diese Kraftübertragungen unterbrochen worden sind, wird das Kraftfahrzeug langsam ausrollen und die Abtriebswelle 60 abbremsen. Die Abtriebswelle 60 ist nicht trennbar mit den Rädern des Kraftfahrzeuges verbunden, so daß deren Drehzahl die Drehzahl ist, auf die die Komponenten in der Gruppen-, der Schalt- und der Schaltgetriebeeinheit IV, III und II gebracht werden müssen. Dann wird das Rückwärtsrad 68 über die Synchronisiervorrichtung 70 mit der Abtriebswelle 60 verbunden. Schließlich wird die Synchronisiervorrichtung 44 so bewegt, daß sie die Ausgangswelle 20 mit dem Zahnrad 40 verbindet. Sollte die Lamellenkupplung 24 ausgerückt worden sein, so wird sie wiederum eingerückt. Der Kraftfluß von der noch einzurückenden Kupplung I zu den Rädern verläuft dann wie folgt über die Kupplung I, das Eingangszahnrad 28, das Gehäuse 16, die Ausgangswelle 20, das Zahnrad 40, das Zahnrad 56, den Hohlkörper 58, das Zahnrad 50, das Zahnrad 34, das Doppelzahnrad 62, das Umkehrrad 66, das Rückwärtsrad 68 und die Abtriebswelle 60. Während des Einrückens der Kupplung I findet dann ein Drehzahlangleich des Motors 12 statt, so daß die Rückwärtsfahrt begonnen werden kann.

Der Vorteil dieses Schaltverfahrens liegt darin, daß durch die jeweils abgekuppelten Schwungmassen geringe Drehmomente an den Synchronisiervorrichtungen 42, 44, 70 und 72, insbesondere an denen der Gruppengetriebeeinheit IV, angreifen, die mit kleinen Synchronisiervorrichtungen beherrschbar sind, so daß selbst bei wenig vorhandenem Raum in dem Getriebegehäuse ein leichter Wechsel einer Übersetzung möglich ist.

**Patentansprüche**

1. Verfahren zum Schalten eines Getriebes, das aus mehr als zwei hintereinander geschalteten Getriebeeinheiten (II, III, IV) besteht, dadurch gekennzeichnet, daß bei einem Übersetzungswechsel in einer in Richtung auf den Abtrieb letzten beteiligten Getriebeeinheit (IV, III oder II) davorliegende beteiligte Schaltverbindungen (42, 44, 70, 72) in dem Getriebe gelöst werden, und daß der Aufbau neuer Schaltverbindungen (42, 44, 70, 72) bei der letzten Getriebeeinheit (IV, III oder II) beginnend derart durchgeführt wird, daß die beteiligten Schaltverbindungen (42, 44, 70, 72) der davorliegenden Getriebeeinheiten (III oder II) so lange in ihrer gelösten Stellung gehalten werden, bis sie jeweils mit der der dahinterliegenden Getriebeeinheit (III oder IV) in gleicher Drehzahl umlaufen.

2. Verfahren nach Anspruch 1, dadurch gekennzeichnet, daß die Schaltverbindungen (42, 44, 70, 72) aller Getriebeeinheiten (II, III, IV) als Synchronisiervorrichtungen ausgebildet sind.

3. Verfahren nach Anspruch 1, dadurch gekennzeichnet, daß sowohl kraftschlüssige als auch formschlüssige Schaltverbindungen (18, 24 und 42, 44, 70, 72) vorgesehen sind.

4. Verfahren nach Anspruch 1, dadurch gekennzeichnet, daß der Übersetzungswechsel automatisch durchgeführt wird.

**Claims**

1. A method of shifting the gears of a transmission comprising more than two transmission components (III, IV, V) incorporated one behind the other, characterised in that, during a gear change in the last transmission component (IV, III or II) engaged in the direction of the power output, preceding shift connections involved (42,44,70,72) in the transmission system are released, and that the establishment of new shift connections (42,44,70,72) starting at the last transmission component (IV, III or II) is so executed that the shift connections (42,44,70,72) involved of the preceding transmission components (III or II) are retained in their released position until they revolve respectively at the same rpm as that of the preceding transmission component (III or IV).

2. A method according to Claim 1, characterised in that the shift connections (42,44,70,72) of all transmission components (II, III, IV) are designed as synchronising devices.

3. A method according to Claim 1, characterised in that both power-locking and form-locking shift connections (18, 24 and 42,44,70,72) are provided.

4. A method according to Claim 1, characterised in that the gear change is executed automatically.

**Revendications**

1. Procédé de changement de vitesse d'une transmission constitué par plus de 2 unités montées en série (II, III, IV), caractérisé en ce que dans le cas d'un changement du rapport dans une unité de la transmission (IV, III ou II) concernée en dernier dans la direction de la sortie, les connexions de couplage (42, 44, 70, 72) concernées qui la précèdent sont déconnectées dans la transmission et en ce que la constitution de nouvelles connexions de couplage (42, 44, 70, 72) à partir de la dernière unité (IV, III ou II) de la transmission est réalisée de telle manière que les connexions de couplage (42, 44, 70, 72) concernées des unités (III ou II) de la transmission qui la précèdent sont mentionnées dans leur position déconnectée jusqu'à ce qu'elles tournent à la même vitesse que celles de l'unité (III ou IV) de la transmission qui la suit.

2. Procédé selon la revendication 1, caractérisé en ce que des connexions de couplage (42, 44, 70, 72) de toutes les unités (II, III, IV) de la transmission sont réalisées sous la forme de dispositifs de synchronisation.

3. Procédé selon la revendication 1, caractérisé en ce qu'il est prévu des connexions de couplage (18, 24 et 42, 44, 70, 72) à liaison aussi bien à force que par complémentarité de forme.

4. Procédé selon la revendication 1, caractérisé en ce que le changement de rapport est réalisé automatiquement.